(19) **Europäisches Patentamt**

**European Patent Office**

**Office européen des brevets**

(11) **EP 1 698 875 A2**

(12) **EUROPEAN PATENT APPLICATION**

(43) Date of publication:
06.09.2006 Bulletin 2006/36

(51) Int Cl.:
*G01L 1/14* (2006.01)

(21) Application number: 06075438.9

(22) Date of filing: 27.02.2006

(84) Designated Contracting States:
AT BE BG CH CY CZ DE DK EE ES FI FR GB GR HU IE IS IT LI LT LU LV MC NL PL PT RO SE SI SK TR
Designated Extension States:
AL BA HR MK YU

(30) Priority: 04.03.2005 US 75063

(71) Applicant: Delphi Technologies, Inc.
Troy, MI 48007 (US)

(72) Inventors:
• Hawes, Kevin J.
Greentown, IN 46936 (US)
• Fultz, William W.
Carmel, IN 46033 (US)

(74) Representative: Denton, Michael John et al
Delphi European Headquarters,
64 avenue de la Plaine de France,
Paris Nord II,
B.P. 65059, Tremblay en France
95972 Roissy Charles de Gaulle Cedex (FR)

(54) **Capacitive sensing arrangement**

(57) A capacitive sensing arrangement (10) includes a body (20) formed of a textile composite material. Both a first electrical conductor (22) and a second electrical conductor (24) are attached to the body such that the conductors are oriented substantially parallel to one another. A capacitance measuring device (14) is coupled to at least one of the conductors.

Fig.1.

**Description**

TECHIVICAL BACKGROUND

The present invention relates to a capacitive sensing arrangement, and, more particularly, to a capacitive sensing arrangement for detecting a force exerted on the arrangement by the object.

BACKGROUND OF THE INVENTION

Vehicles are known to include safety countermeasure devices that may be deployed in the event of a collision with a pedestrian. These safety countermeasure devices may include a crush sensor for detecting a collision with a heavy object such as a pedestrian. The crush sensor may discriminate between heavy objects such as pedestrians and other lighter objects such as balls and rocks, which are sometimes referred to as "immunity impacts". More particularly, the crush sensor may include a capacitor having two opposing plates that may be pushed closer together by the force of a collision with a heavy object. As the plates move closer together, the capacitance of the capacitor increases. Thus, by monitoring the capacitance, it is possible to detect when the crush sensor has been involved in a collision with a heavy object such as a pedestrian. The crush sensor may be embedded, such as in a front bumper of a motor vehicle, for example, to improve sensor discrimination by allowing the bumper structure to filter the force of light objects (abuse) from the force of heavier objects such as the human leg.

A problem is that such crush sensors are sensitive to moisture or humidity. Since the dielectric constant of water is greater than that of air, the capacitance of the crush sensor may suddenly increase not only in response to a collision, but also in response to an influx of moisture between the plates of the capacitor. Thus, a crush sensor may not be able to differentiate between the effects of a collision and the effects of water entering between the plates of the capacitor. This is particularly troublesome in an automotive environment wherein a vehicle is routinely exposed to varying levels of moisture and humidity.

What is needed in the art is a capacitive sensing arrangement that can detect a collision with a heavy object and that is not greatly affected by the temporary presence of moisture in the ambient environment.

SUMMARY OF THE INVENTION

The present invention provides a flexible and resilient capacitive sensing arrangement that does not retain water, and thus has a capacitance that does not suffer long term moisture contamination after water intrusion from the ambient environment.

The invention comprises, in one form thereof, a capacitive sensing arrangement including a body formed of a textile composite material. Both a first electrical conductor and a second electrical conductor are attached to the body such that the conductors are oriented substantially parallel to one another. A capacitance measuring device is coupled to at least one of the conductors.

The invention comprises, in another form thereof, a capacitive sensing arrangement including a first outer electrical conductor, a second outer electrical conductor, and a middle electrical conductor disposed between the outer electrical conductors. The first outer electrical conductor and the middle electrical conductor are oriented substantially parallel to one another. The outer electrical conductors are electrically connected to each other. Textile composite material is disposed between the first outer electrical conductor and the middle electrical conductor, and between the middle electrical conductor and the second outer electrical conductor. A capacitance measuring device is coupled to at least the middle electrical conductor.

The invention comprises, in yet another form thereof, a collision sensor system including a vehicle having an outer surface. A capacitor is attached to the vehicle proximate the outer surface. The capacitor includes a dielectric formed of a textile composite material, a first electrical conductor and a second electrical conductor. Both the first electrical conductor and the second electrical conductor are attached to the dielectric such that the conductors are oriented substantially parallel to one another. A capacitance measuring device is coupled to at least one of the conductors.

An advantage of the present invention is that the capacitive sensing arrangement is water-repellent, in that the textile composite material and the dielectric air-gap spacing do not retain water like conventional foam-based capacitive structures, and thus have a capacitance that is not greatly affected after being exposed to water.

Another advantage is that the capacitive sensing arrangement is formed of flexible and resilient materials that retain their shape after collisions. Yet another advantage is that the capacitive sensing arrangement may shleid itself from outside electric fields, thus improving the immunity of the arrangement to ambient electric fields.

A further advantage is that the capacitive sensing arrangement is less expensive than known crush sensors.

BRIEF DESCRIPTION OF THE DRAWINGS

The above-mentioned and other features and objects of this invention, and the manner of attaining them, will become more apparent and the invention itself will be better understood by reference to the following description of embodiments of the invention taken in conjunction with the accompanying drawings, wherein:

Figure 1 is a schematic block diagram of one embodiment of a capacitive sensing arrangement of the present invention.
Figure 2A is a side view of one embodiment of the capacitor of the capacitive sensing arrangement of Figure 1.
Figure 2B is a side view of another embodiment of the capacitor of the capacitive sensing arrangement of Figure 1.
Figure 2C is a side view of yet another embodiment of the capacitor of the capacitive sensing arrangement of Figure 1.
Figure 3 is a schematic block diagram of another embodiment of a capacitive sensing arrangement of the present invention.
Figure 4 is a schematic block diagram of one embodiment of a collision sensor system of the present invention, including a capacitive sensing arrangement of the present invention.

Corresponding reference characters indicate corresponding parts throughout the several views. Although the drawings represent embodiments of the present invention, the drawings are not necessarily to scale and certain features may be exaggerated in order to better illustrate and explain the present invention. The exemplifications set out herein illustrate embodiments of the invention in several forms and such exemplification is not to be construed as limiting the scope of the invention in any manner.

DESCRIPTION OF THE PREFERRED EMBODIMENTS

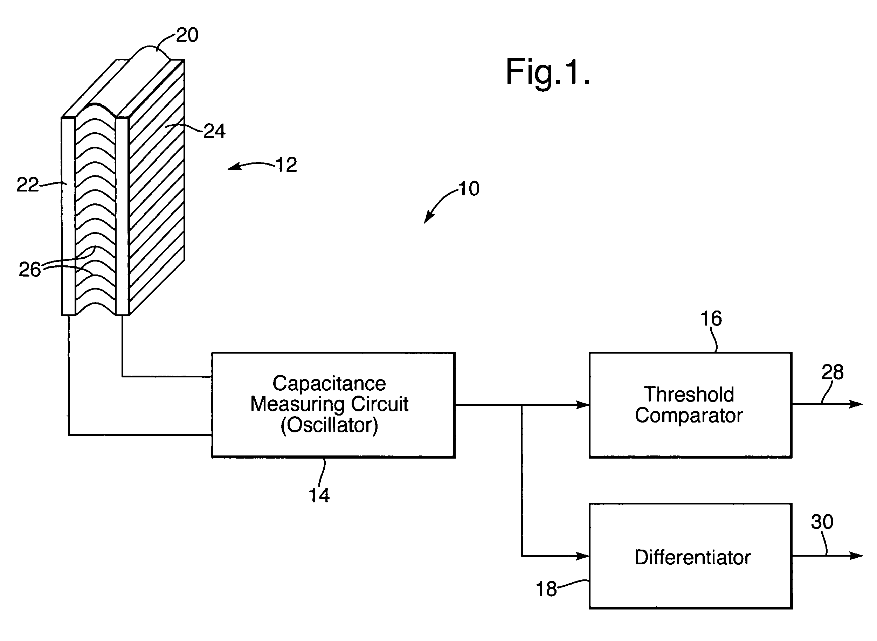

The embodiments discussed below are not intended to be exhaustive or limit the invention to the precise forms disclosed in the following detailed description. Rather, the embodiments are chosen and described so that others skilled in the art may utilize their teachings.
Referring now to the drawings, and more particularly to Figure 1, there is shown one embodiment of a capacitive sensing arrangement 10 of the present invention including a crushable capacitor or "crush sensor" 12, a capacitance measuring device 14, a threshold comparator 16 and a differentiator 18. Capacitor 12 includes a body 20 and electrical conductors 22, 24.
Body 20 is formed of a textile composite material, such as a three-dimensional weave material. The textile composite material may also be in the form of a monofilament material and/or a multi-fiber polyester material each filament of which has a thickness of approximately between 0.005 inch and 0.010 inch. The textile composite material is advantageously hydrophobic, i.e., water-repellent or non-absorbent, such that moisture and humidity may not appreciably collect within body 20 between conductors 22, 24. The textile composite material may have a relatively high ratio of air to material, thereby allowing a faster rate of drying than does foam material. Thus, the capacitance of capacitor 12 may be substantially unaffected by exposure to liquid water in the ambient environment.
The textile composite material of body 20 may be flexible enough that an external force may push conductors 22, 24 closer together and thereby cause body 20 to flex therebetween. More particularly, body 20 may include a plurality of C-shaped filaments 26 which become more sharply curved as they bend or flex as conductors 22, 24 are pushed closer together and a distance between conductors 22, 24 decreases. As conductors 22, 24 move closer together, the capacitance of capacitor 12 increases. The textile composite material may also be resilient enough that body 20 springs back to its original shape after the force on conductors 22, 24 is released, and the conductors 22, 24 are separated by a distance approximately equal to the distance therebetween before the force was exerted. One suitable material for body 20 is a $D^3$ fabric sold by Gehring Textiles, Inc. of Garden City, New York.
Conductors 22, 24 may be oriented parallel to each other and may provide a measurable capacitance therebetween. In the embodiment of FIG. 1, conductors 22, 24 are plate-shaped, but it is alternatively possible for conductors 22, 24 to have other shapes. It is possible for one of conductors 22, 24 to be grounded.

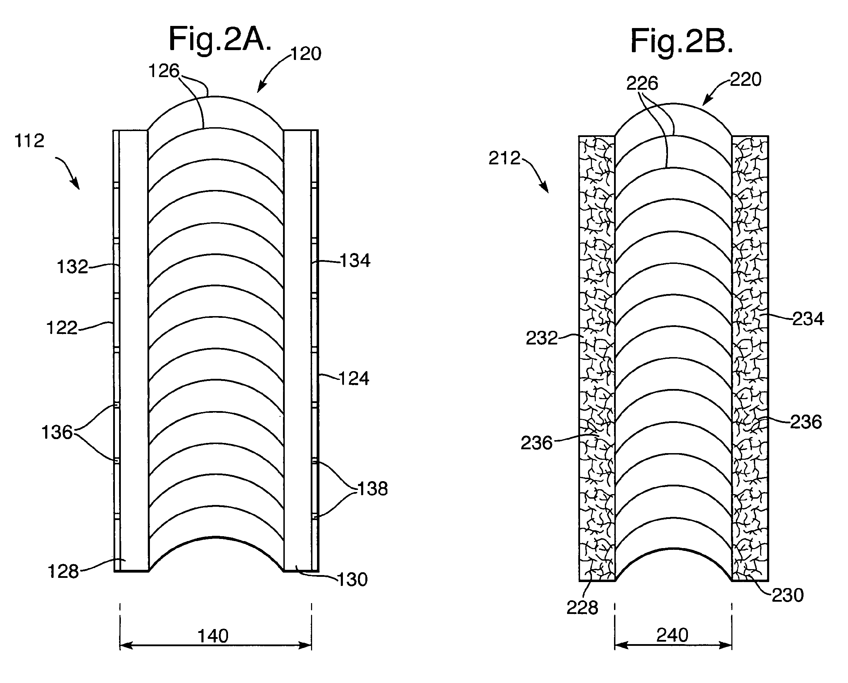

FIGS. 2A-C illustrate alternative specific embodiments of a capacitor suitable for use in a capacitive sensing arrangement of the present invention. Capacitor 112 of FIG. 2A includes a body 120 having C-filaments 126 the opposite ends of which are connected to electrically non-conductive backing sheets 128, 130. Sheets 128, 130 may be formed of the same textile composite material of which filaments 26 and 126 are formed, and may be arranged to form a mesh. Sheets 128, 130 may function to anchor filaments 126 in place, and may possess the same flexible, resilient and hydrophobic properties as filaments 126.
Conductors 122, 124 may be in the form of plate-shaped substrates adhered or otherwise attached to respective outer surfaces 132, 134 of non-conductive sheets 128, 130. In one embodiment, an electrical resistance between a corner of one of rectangular conductors 122, 124 to an opposite corner of that same conductor is approximately five ohms. A distance 140 between conductors 122, 124 may be greater than approximately one-eighth inch, such as approximately 0.5 inch, for example.

Conductors 122, 124 may have respective sets of throughholes 136, 138 for allowing air to pass outwardly through conductors 122, 124, i.e., to escape body 120, when conductors 122, 124 are pushed together by an external force. Thus, throughholes 136, 138 reduce the amount of force required to push conductors 122, 124 closer together, and make capacitor 112 more sensitive to external forces. Throughholes 136, 138 may also allow moving air around the capacitor to pass through the capacitor rather than push conductors 122, 124 together. Throughholes 136, 138 may thereby make the capacitor immune to the effects of air moving around the capacitor. Thus, a capacitor with such throughholes may be placed near an air duct, for example, with little or no loss of performance. As a further advantage, throughholes 136, 138 may provide improved air ventilation through body 120 and thereby further reduce the amount of moisture or humidity that can be retained within body 120. Thus, throughholes 136, 138 advantageously increase the level of immunity of capacitor 112 to humidity and moisture.

In one embodiment, conductors 122, 124 are in the form of sheets of flexible and electrically non-conductive material having a coating of electrically conductive material. In one embodiment, conductors 122, 124 are in the form of sheets of flexible, thin polyester film coated with aluminum.

Another capacitor suitable for use in a capacitive sensing arrangement of the present invention is shown in FIG. 2B. Capacitor 212 includes a body 220 having C-filaments 226 the opposite ends of which are connected to electrical conductors 232, 234. Conductors 232, 234 are in the form of electrically non-conductive backing sheets 228, 230 impregnated with electrically conductive strands 236. Sheets 228, 230 may be formed of the same textile composite material of which filaments 26 and 226 are formed, and may be arranged to form a mesh. Sheets 228, 230 function to anchor filaments 226 in place, and may possess the same flexible, resilient and hydrophobic properties as filaments 226.

Strands 236 may be formed of any electrically conductive material, such as a metal, and each individual strand 236 may be of any length. The thickness of each strand 236 may typically be less than 0.05 inch. Strands 236 may be deposited in sheets 228, 230 in any orientation, and their orientations may, in fact, be random. It is desirable that at least a portion of strands 236 within each one of sheets 228, 230 be in physical contact with one another such that they are electrically connected. Such electrical connections between strands 236 may improve the capacitive properties of capacitor 212. In one embodiment, fibers 236 crisscross and touch each other such that substantial electrical continuity across each one of plates 228, 230 is provided via fibers 236. However, it is possible for some, or even a majority, of strands 236 to be unconnected to any other strands 236. In one embodiment, an electrical resistance between a corner of one of rectangular conductors 232, 234 to an opposite corner of that same conductor is approximately five ohms, and a distance 240 between conductors 232, 234 is greater than approximately one-eighth inch.

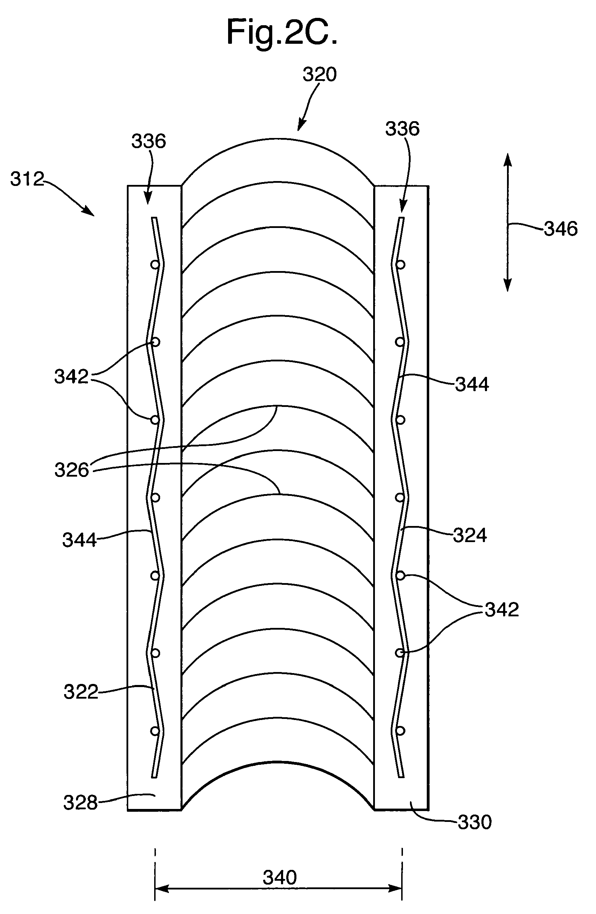

Yet another capacitor suitable for use in a capacitive sensing arrangement of the present invention is shown in FIG. 2C. Capacitor 312 includes a body 320 having C-filaments 326 the opposite ends of which are connected to electrically non-conductive backing sheets 328, 330. Sheets 328, 330 may be formed of the same textile composite material of which filaments 26 and 326 are formed, and may be arranged to form a mesh. Sheets 328, 330 may function to anchor filaments 326 in place, and may possess the same flexible, resilient and hydrophobic properties as filaments 326.

Conductors 322, 324 may each be in the form of a mesh of interwoven, electrically conductive threads 336 including a plurality of first threads 342 oriented in a first direction, and a plurality of second threads 344 oriented in a second direction substantially perpendicular to the first direction. In the embodiment shown in FIG. 2C, the first direction in which first threads 342 are oriented is into and out of the page, and second threads 344 are oriented in directions indicated by double arrow 346. Threads 336 may be placed in sheets 328, 330 during the manufacturing of sheets 328, 330. In one embodiment, an electrical resistance between a corner of one of the meshes of threads 336 to an opposite corner of that same mesh of threads 336 is approximately five ohms, and a distance 340 between conductors 322, 324 is greater than approximately one-eighth inch.

Threads 336 may be formed of any electrically conductive material, such as a metal. The thickness of each thread 336 may typically be less than 0.05 inch.

The capacitor has been illustrated in FIGS. 2A-C as having two conductors of similar structure. However, it is possible for a capacitor to have two dissimilar conductors. That is, it is possible for a capacitor of the present invention to be formed with two conductors from any combination of FIGS. 2A-C.

Capacitance measuring device 14 is shown in FIG. 1 in the form of an oscillator that is electrically connected to each of conductors 22, 24. However, capacitance measuring device 14 may alternatively be in the form of any other device that is capable of measuring the capacitance between conductors 22, 24. For example, device 14 may include a phase detector that is connected to at least one of conductors 22, 24.

Threshold comparator 16 compares the capacitance measured by capacitance measuring device 14 to a threshold capacitance. If the capacitance measured by capacitance measuring device 14 is greater than the threshold capacitance, then it may be determined that a force having a magnitude exceeding a threshold magnitude is being exerted on capacitor 12. Moreover, from the raw capacitance measurements from device 14, comparator 16 may output a signal 28 indicative of the distance between conductors 22, 24 or of the distance by which conductors 22, 24 have been moved toward one another from their original relative positions.

Differentiator 30 differentiates the capacitance measured by capacitance measuring device 14 to thereby determine a rate of change of the capacitance of capacitor 12. The rate of change of the capacitance measured by capacitance measuring device 14 may be indicative of the weight and/or speed of an object that is exerting a force on capacitor 12 wherein that force tends to push conductors 22, 24 together. Differentiator 18 may output a signal 30 indicative of the speed at which conductors 22, 24 are converging, i.e., moving relative to one another. This speed signal 30 may be expressed in terms of distance per unit time.

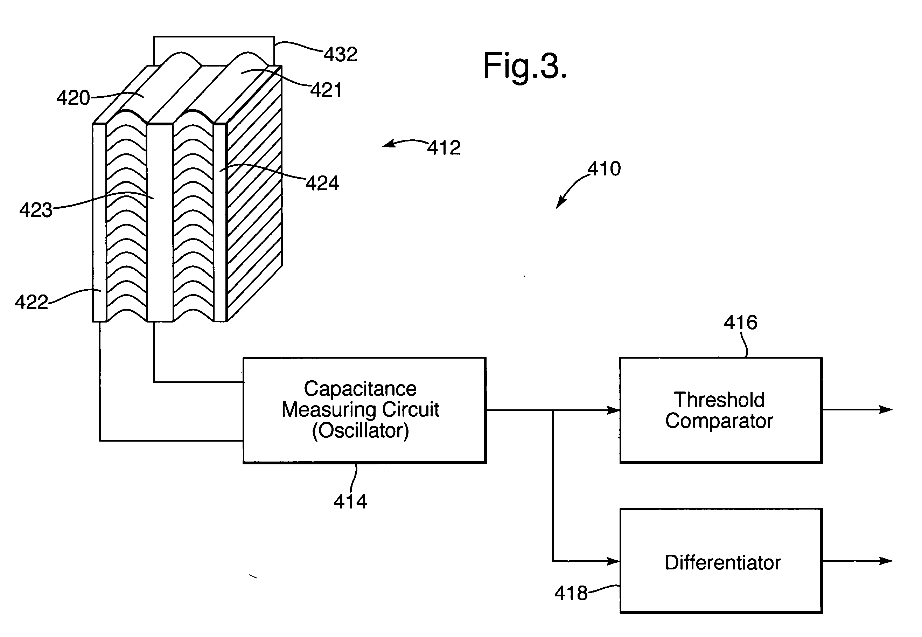

Another embodiment of a capacitance sensing arrangement 410 of the present invention is illustrated in FIG. 3. Arrangement 410 includes a crushable capacitor or "crush sensor" 412, a capacitance measuring device 414, a threshold comparator 416 and a differentiator 418. Capacitor 412 includes bodies 420, 421 sandwiched between two outer electrical conductors 422, 424 and a middle electrical conductor 423. Conductors 422, 423, 424 may all be oriented parallel to each other, with middle conductor 423 being disposed between outer conductors 422, 424. As shown in FIG. 3, all of conductors 422, 423, 424 may be plate-shaped. Conductors 422, 424 are electrically connected together, such as by a wire 432.

Outer capacitors 422, 424 may operate to shield middle conductor 423 from external electric fields, thereby providing capacitor 412 with some immunity to the effects of such ambient electric fields. Thus, outer capacitors 422, 424 may function as a Faraday shield to improve electromagnetic shielding performance. That is, outer capacitors 422, 424 may form a Faraday electric cage isolating the capacitor from external field effects. It is possible for outer conductors 422, 424 to be electrically grounded.

The structure of conductors 422, 423, 424 may be substantially similar to those of conductors 22, 24 and/or the conductors described with reference to FIGS. 2A-C.

Bodies 420, 421 may each be substantially similar in construction to body 20. Thus, the structure of bodies 420, 421 is not described in detail herein. Bodies 420, 421 are shown as being two separate bodies. However, it is possible for bodies 420, 421 to be formed of one continuous body having a middle conductor disposed approximately in the center thereof. Such a middle conductor may be in the form of randomly oriented conductive fibers, as shown in FIG. 2B, or may be in the form of an interwoven mesh of conductors, as shown in FIG. 2C.

Capacitance measuring device 414, threshold comparator 416 and differentiator 418 may all be substantially similar to their counterparts in arrangement 10 of FIG. 1, and thus they are not described further herein.

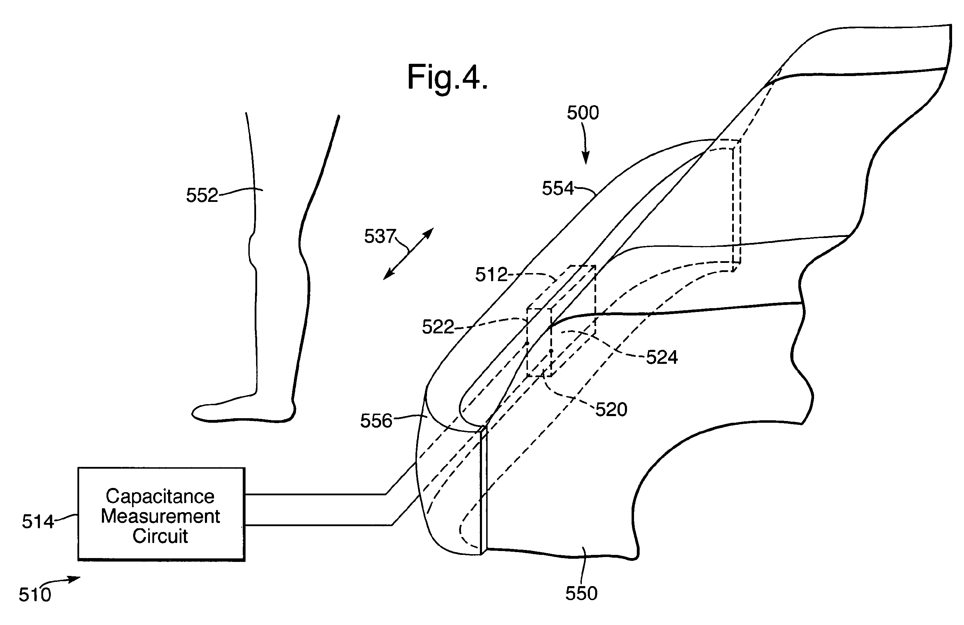

FIG. 4 illustrates one embodiment of a collision sensor system 500 of the present invention including a capacitive sensor arrangement 510 attached to a vehicle 550. Arrangement 510 may be configured to sense a collision between vehicle 550 and a pedestrian, a leg 552 of whose is shown in FIG. 4. Arrangement 510 includes a crushable capacitor 512 and a capacitance measuring device 514. Capacitor 512, which may be substantially similar to any of the inventive capacitors described above, may be attached to vehicle 550 proximate an outer surface 554. More particularly, capacitor 512 may be embedded under outer surface 554 of vehicle 550 such that a force is exerted on capacitor 512 when leg 552 collides with outer surface 554.

In the embodiment shown, outer surface 554 is an outer surface of a front bumper 556. However, it is also possible, within the scope of the present invention, for the capacitor to be attached proximate an outer surface of a rear bumper or a side surface of a vehicle.

Capacitance measuring device 514 is connected or otherwise coupled to parallel conductors 522, 524 on opposite sides of a textile composite dielectric body 520 of capacitor 512. Thus, device 514 measures changes in the capacitance of capacitor 512 when conductors 522, 524 are pushed closer together by the force leg 552 exerts upon bumper 556 during a collision. A leg pressing conductors 522 and 524 together causes a corresponding increase in capacitance according to the equation:

$$C = \varepsilon_0 K(\text{Area})/d,$$

wherein d is the distance between plates. Thus, a four-fold increase in measured capacitance, such as from 15 pF to 60 pF, may indicate that the distance between plates P3 and P4 has been reduced by 75%.

A threshold comparator (not shown) and/or a differentiator (not shown) many be coupled to the output of device 514 to thereby determine whether the magnitude of the capacitance or the rate of change of the capacitance is indicative of a relatively high-speed collision between vehicle 550 and a relatively heavy object such as a pedestrian. If it is determined that a collision with a pedestrian has occurred, then a safety countermeasure deployment signal may be transmitted. The safety countermeasure may be in the form of some action to increase the safety of the pedestrian or of the occupants of vehicle 550. For example, the front hood latch may be released in order to allow the front hood to spring upwardly and thereby cushion the pedestrian as he collides with the front hood.

Capacitor 512 is schematically indicated in FIG. 4 as having a substantially square cross section. However, capacitor 512 may have an elongated shape that extends across the entire bumper 556. That is, capacitor 512 may form a continuous strip across the bumper surface. Thus, the capacitor may sense a collision with the pedestrian at any point along the length of bumper 556.

In an alternative embodiment (not shown), a collision sensor system of a vehicle includes a plurality of independent capacitive sensing arrangements. Each capacitive sensing arrangement may include a respective one of a plurality of sensing capacitors that are spaced out along the length of the bumper. That is, each capacitive sensing arrangement may be localized to a respective zone, with each zone having its own respective sensing element and monitor circuit. Thus, by analyzing the outputs of each of the capacitive sensing arrangements, the location along the bumper at which the collision occurred and the width of the object that was collided with may be determined.

Capacitor 512 may be mounted on or integrally formed with bumper 556. It is also possible for bumper 556 to function as conductor 524 without any separate structure. In this case in particular, conductor 524 may extend farther than conductor 522 in lateral directions 537.

Capacitor 524 may be electrically connected to chassis ground. When crushed, i.e., when conductor 522 is moved closer to conductor 524, the capacitance of capacitor 512 changes.

An advantage of the present invention is that the larger physical thickness of the capacitor due to the approximately 0.5 inch thick weave material of the capacitor body allows more travel distance during a collision event. This additional distance may aid the discrimination between large and small objects by allowing only large objects with sufficient energy to reach the greater bumper crush depths. At the same time, the thicker sensor of the present invention is able to quickly detect an initial impact at an early stage without significant loss of resolution. The additional thickness of the sensor enables the system of the present invention to operate over a wider crush distance and thus offers improved initial detection as well as discrimination due to movement measuring capability while the bumper is crushed into high energy depths.

The capacitive sensing arrangement of the present invention has been described herein as being used for collision sensing. However, it is also possible for the capacitive sensing arrangement to be used for proximity sensing in which the capacitor is used to sense the presence of an object near the capacitor.

While this invention has been described as having an exemplary design, the present invention may be further modified within the spirit and scope of this disclosure. This application is therefore intended to cover any variations, uses, or adaptations of the invention using its general principles. Further, this application is intended to cover such departures from the present disclosure as come within known or customary practice in the art to which this invention pertains.

**Claims**

1. A capacitive sensing arrangement (10), comprising:

   a body (20) formed of a textile composite material;
   a first electrical conductor (22) and a second electrical conductor (24), both said first electrical conductor and said second electrical conductor being attached to said body such that said conductors are oriented substantially parallel to one another; and
   a capacitance measuring device (14) coupled to at least one of said conductors.

2. The arrangement of claim 1, wherein said textile composite material comprises a weave material.

3. The arrangement of claim 2, wherein said textile composite material comprises a three-dimensional weave material.

4. The arrangement of claim 1, wherein said textile composite material comprises a monofilament material.

5. The arrangement of claim 1, wherein said textile composite material comprises a multi-fiber polyester material.

6. The arrangement of claim 1, wherein both said textile composite material and said conductors are flexible.

7. The arrangement of claim 1, wherein at least one of said conductors is plate-shaped.

8. The arrangement of claim 7, wherein said plate-shaped conductor is attached to an outer surface (132, 134) of said body.

9. The arrangement of claim 7, wherein said plate-shaped conductor comprises a sheet of flexible and electrically non-conductive material having a coating of electrically conductive material.

10. The arrangement of claim 7, wherein said plate-shaped conductor has at least one throughhole (136, 138).

11. The arrangement of claim 1, wherein at least one of said conductors comprises a plurality of electrically conductive strands (236).

12. The arrangement of claim 11, wherein at least some of said conductors are electrically connected to each other.

13. The arrangement of claim 11, wherein said strands are interwoven with each other.

14. The arrangement of claim 1, wherein a distance between said conductors is greater than approximately one-eighth inch.

15. A capacitive sensing arrangement (10), comprising:

a first outer electrical conductor (422), a second outer electrical conductor (424), and a middle electrical conductor (423) disposed between said outer electrical conductors, said first outer electrical conductor and said middle electrical conductor being oriented substantially parallel to one another, said outer electrical conductors being electrically connected to each other, textile composite material (420, 421) being disposed between said first outer electrical conductor and said middle electrical conductor, and between said middle electrical conductor and said second outer electrical conductor; and
a capacitance measuring device (414) coupled to at least said middle electrical conductor.

16. The arrangement of claim 15, wherein said outer electrical conductors comprise a means for shielding said middle electrical conductor from external electric fields.

17. The arrangement of claim 15, wherein at least one of said electrical conductors is plate-shaped.

18. A collision sensor system (500), comprising:

a vehicle (550) having an outer surface (554);
a capacitor (512) attached to said vehicle proximate said outer surface, said capacitor including:
a dielectric (520) formed of a textile composite material; and
a first electrical conductor (522) and a second electrical conductor (524), both said first electrical conductor and said second electrical conductor being attached to said dielectric such that said conductors are oriented substantially parallel to one another; and
a capacitance measuring device (514) coupled to at least one of said conductors.

19. The arrangement of claim 18, wherein said capacitor is embedded under said outer surface of said vehicle.

20. The arrangement of claim 18, wherein said conductors are substantially parallel to said outer surface of said vehicle.

21. The method of claim 18, wherein the outer surface is on a front bumper (556) of the vehicle.

Fig.1.

EP 1 698 875 A2

# Fig.2A.

# Fig.2B.

EP 1 698 875 A2

# Fig.2C.

Fig.3.

420
421
432
424
423
422
412
410

Capacitance
Measuring Circuit
(Oscillator)

414

Threshold
Comparator

416

Differentiator

418

EP 1 698 875 A2

Fig.4.

Capacitance Measurement Circuit